# EUROPEAN PATENT APPLICATION

(11) **EP 3 486 085 A1**
(43) Date of publication of application: **22.05.2019**
(21) Application number: 17202884.7
(22) Date of filing: 21.11.2017
(51) Int. Cl.: B33Y 10/00, B33Y 50/02, B33Y 40/00, B29C 64/30, B29C 64/393, B29C 64/205, B29C 64/245

(54) **CALIBRATION DEVICE FOR AN APPARATUS FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: Braunroth, Domenik, 96465 Neustadt bei Coburg (DE)
(74) Representative: Hafner & Kohl

(57) **Abstract**

Calibration device (1) for an apparatus for additively manufacturing of three-dimensional objects, which calibration device (1) comprises at least one determination unit (2, 3) and at least one calibration unit (16, 17), wherein the at least one determination unit (2) is adapted to determine at least one geometrical parameter of a carrying element (4) of a powder module and wherein the at least one calibration unit (17) is adapted to, in particular automatically, adjust an application unit (5) of the apparatus dependent on the at least one determined geometrical parameter of the carrying element (4) and/or wherein the at least one determination unit (3) is adapted to determine at least one geometrical parameter of an application unit (5) of the apparatus and wherein the at least one calibration unit (16) is adapted to, in particular automatically, adjust a carrying element (4) of a powder module dependent on the at least one determined geometrical parameter of the application unit (5).

## Description

The invention relates to a calibration device for an apparatus for additively manufacturing of three-dimensional objects.

Generally, apparatuses for additively manufacturing of three-dimensional objects are known that comprise or can be connected with powder modules that provide (powdery) build material to be consolidated in a manufacturing process inside the apparatus. A respective powder module may carry a volume of build material that is selectively consolidated to additively build the three-dimensional object. Dependent on a position of the carrying element new layers of build material may be applied onto a previously consolidated layer of build material.

To provide fresh build material onto the carrying element or onto the upper surface of build material carried by the carrying element, respectively, an application unit is usually provided that is adapted to apply build material onto the build plane. To ensure that fresh layers of build material may accurately be applied onto the build plane, an accurate positioning and calibration of the application unit and the carrying element is essential.

Typically, in advance to a manufacturing process, service personnel manually adjust the application unit, wherein at least the application unit has to be manually adjusted before the manufacturing process can be started.

It is an object to provide a calibration device for an apparatus for additively manufacturing of three-dimensional objects, wherein the calibration of the application unit is improved.

The object is inventively achieved by a calibration device according to claim 1. Advantageous embodiments of the invention are subject to the dependent claims.

The calibration device described herein is a calibration device for an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device, as described before, which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The inventive calibration device is used to calibrate the carrying element and/or the application unit to ensure that the application of fresh build material onto the carrying element fulfills quality requirements defined by the additive manufacturing process performed with a corresponding apparatus.

The invention is based on the idea that the calibration device comprises at least one determination unit and at least one calibration unit, wherein the at least one determination unit is adapted to determine at least one geometrical parameter of a carrying element of a powder module and wherein the at least one calibration unit is adapted to, in particular automatically, adjust an application unit of the apparatus dependent on the at least one determined geometrical parameter of the carrying element and/or wherein the at least one determination unit is adapted to determine at least one geometrical parameter of an application unit of the apparatus and wherein the at least one calibration unit is adapted to, in particular automatically, adjust a carrying element of a powder module dependent on the at least one determined geometrical parameter of the application unit.

Therefore, the inventive calibration device allows for the determination of at least one geometrical parameter of the carrying element and to, in particular automatically, adjust an application unit dependent on the determined geometrical parameter. For example, the height of the carrying element may be measured and the application unit may be adjusted in that a defined relative position between the carrying element and the application unit is met throughout the additive manufacturing process inside the apparatus.

Additionally, the inventive calibration device allows for the determination of at least one geometrical parameter of the application unit, wherein the carrying element may be, in particular automatically, adjusted dependent on the determined geometrical parameter of the application unit. For example, at least one component of the application unit, in particular the height of a coating blade of the application unit, can be measured. Thus, the calibration device is adapted to determine at least one geometrical parameter affecting the relative position between the carrying element and the application unit that is used to apply build material on the carrying element. Particularly, the height of the coating blade may be determined in that a conclusion can be made whether the coating blade is adapted to properly apply build material onto the carrying element or whether the carrying element or the coating blade need to be adjusted.

The carrying element may be built as a build plate that can be arranged inside a powder chamber of a powder module, e.g. a build module. The build plate carries the build material inside the powder module, wherein the build plate is usually lowered as the manufacturing process advances. By lowering the build plate the powder module provides a volume for fresh build material to be applied on the uppermost surface of (selectively consolidated) build material carried by the build plate.

As an application unit typically a coating unit is used with at least one coating element, in particular a coating blade or a rake. The coating element conveys the build material to the build plane (uppermost surface of build material carried by the carrying element, in particular the build plate), e.g. from a dose plane, and distributes the build material in the build plane to generate a fresh layer of build material that can be consolidated in the manufacturing process.

Advantageously, the application unit and the carrying element do not have to be adjusted manually with respect one another, but an automated adjustment of the carrying element and/or the application unit can be performed based on the determination of the geometrical parameter. Thus, the time that is required to adjust the application unit and/or the carrying element can be reduced significantly as service personnel is not required to perform a manual measurement of the geometrical parameter and manually adjust the carrying element and/or the application unit. Thus, downtimes of a corresponding apparatus for additively manufacturing three-dimensional objects can be reduced. In addition, the invention allows to determine whether the at least one geometrical parameter of the carrying element and/or the application unit deviates from a defined condition, for example an initial condition or a manufacturer specification, respectively. If a deviation from such a defined condition is determined, the carrying element and/or the application unit can be adjusted accordingly.

To determine the at least one geometrical parameter different approaches may be used. In general, any sensor adapted to measure at least one geometrical parameter of the carrying element and/or the application unit, in particular an application element of the application unit, may be used. Preferably, the at least one geometrical parameter may be determined via
- an optical determination unit and/or
- a tactile determination unit and/or
- a supersonic determination unit.

Hence, a respective sensor maybe an optical sensor, such as a camera (CCD or CMOS) or a laser interferometer that is adapted to optically measure the geometrical parameter of the respective component. It is also possible to have a tactile sensor adapted to contact the surface of the application unit and/or the carrying element and to determine the at least one geometrical parameter. Besides, it is also possible to have at least a supersonic determination unit using supersonic waves to determine the at least one geometrical parameter.

Of course, the determination unit used to determine the at least one geometrical parameter may comprise not only one but more than one, in particular multiple sensors, to determine the at least one geometrical parameter. Further, an arbitrary combination of different determination units is possible, wherein other or the same determination units may be used to determine the at least one geometrical parameter of the application unit as those used to determine the at least one geometrical parameter of the carrying element.

The determination unit may further be adapted to determine an orientation of an application element of the application unit relative to an application element carrier or a distance between the application element and the application element carrier. Therefore, the determination may further determine whether the application element is inclined with respect to the application element carrier that carries the application element. In other words, the application unit comprises an application element carrier to which the application element is connected.

Preferably, the position of the application element relative to the carrying element (in a coating condition, in which the application unit applies build material onto the build plane) can be adjusted via the connection of the application element to the application element carrier. In other words, the application element carrier defines the relative position of the application element relative to the carrying element and the coating condition. Of course, the application unit may comprise further driving means adapted to drive and position the application element carrier and the application element attached to the application element carrier.

The determination unit may therefore, determine whether the orientation of the application element meets a predefined requirement, for example whether the orientation fits the orientation of the surface of the carrying element. Dependent on the result of the determination, the calibration unit may be adapted to adjust a distance between the application element carrier and an edge of the application element in at least one position along the application element. Thus, the calibration unit may calibrate the distance between the application element carrier and the edge of the application element facing the carrying element (in a coating condition). This allows for a defined adjustment of the relative position of the edge of the application element and the carrying element during the application of build material onto the build plane (or the build plate). Thus, a gap or an oversize fit between the build plane (or the build plate) and the application element can be avoided.

The calibration device can further be improved in that the calibration unit may be adapted to adjust a distance between the application element carrier and an edge of the application element in at least one position along the application element. Thus, an inclination or a slope of the application element, in particular the edge of the application element facing the build plate, can be compensated. Of course, an inclination or a slope of the build plate can also be compensated via a defined adjustment of the application element. By adjusting the distance of the edge of the application element relative to the application element carrier the position of the edge of the application element during the application process can be defined. When build material is applied onto the build plane, the application element carrier moves over the build plane carrying the application element. Thus, an accurate positioning of the edge of the application element ensures that the build material may be applied onto the build plane properly. The adjustment of the distance between the edge of the application element and the application element carrier (e.g. a center of the application element carrier or an edge facing the application element) may be performed by a corresponding positioning means that connects the application element with the application element carrier, such as spindles or screws with corresponding nuts. In particular, the application element is fixed after the distance is adjusted, for example via a lock nut.

The calibration unit may further be adapted to adjust at least two different distances for at least two positions along the application element. For example, if the application element is worn inhomogeneously, the distance between the edge of the application element and the application element carrier may be adjusted differently for two positions along the application element to compensate the inhomogeneous wear.

The distance and/or the orientation may be determined via
- an optical determination unit and/or
- a tactile determination unit and/or
- a supersonic determination unit.

Hence, a respective sensor maybe an optical sensor, such as a camera (CCD or CMOS) or a laser interferometer that is adapted to optically measure the distance and/or the orientation of the application element relative to the application element carrier. It is also possible to have a tactile determination unit or a supersonic determination unit. Of course, the determination of the distance and/or the orientation does not have to be performed with respect to the application element carrier. It is also possible to have another point or plane of reference, such as the carrying element.

The calibration unit and the determination unit of the calibration device may form a combined module. The combined module containing the calibration unit and the determination unit may therefore, be adapted to determine the at least one geometrical parameter of the carrying element and/or of the application unit and, in particular automatically, adjust the carrying element and/or the application unit. Thus, it is possible to assign an application unit to a carrying element, wherein, for example, the determined values for the geometrical parameter of the carrying element and/or the application unit may be stored in a data storage. Thus, the combined module may generate a set comprising a carrying element and a corresponding application unit, wherein the carrying element and/or the application unit are, in particular automatically, adjusted to one another, in that the carrying element and the application unit of the set match each other in terms of the at least one geometrical parameter. The corresponding set may then be provided to an apparatus to be used in the manufacturing process, wherein it is not necessary to measure the carrying element and/or the application unit, but the set can be used without any need for calibration. Thus, the downtime of the apparatus can be reduced significantly, since a calibration in advance to the manufacturing process is not necessary.

According to another embodiment of the calibration device, the calibration device may be connected or connectable with the apparatus, in particular the calibration device may be integrated into the apparatus for additively manufacturing three-dimensional objects. Thus, a calibration routine may be performed inside the apparatus, in particular under the process conditions (in an inertized state inside the process chamber). Therefore, time and process gas can be saved which is used to make the process chamber inert, since service personnel does not have to open the process chamber and adjust the carrying element and/or the application unit manually, but the calibration device may be integrated into the apparatus in that the calibration routine may be performed without the need to open the process chamber and without affecting the process atmosphere.

Besides, the invention relates to an apparatus for additively manufacturing of three-dimensional objects by means of successive layerwise selective irradiation and consolidation of layers of a build material which can be consolidated by means of an energy source, wherein a calibration device is provided, in particular an inventive calibration device, which calibration device comprises at least one determination unit and at least one calibration unit, wherein the at least one determination unit is adapted to determine at least one geometrical parameter of the carrying element of a powder module and wherein the at least one calibration unit is adapted to, in particular automatically, adjust an application unit of the apparatus dependent on the at least one determined geometrical parameter of the carrying element and/or wherein the at least one determination unit is adapted to determine at least one geometrical parameter of an application unit of the apparatus and wherein the at least one calibration unit is adapted to, in particular automatically, adjust a carrying element of the powder module dependent on the at least one determined geometrical parameter of the application unit.

As described before, the calibration device may be arranged externally to the apparatus or the calibration device may be at least partially, in particular the calibrating unit of the calibration device, integrated in the apparatus.

Further, a control unit may be provided that is adapted to assign a calibrated application unit to a manufacturing process the corresponding carrying element is used in, wherein the adjustment of the application unit has been performed dependent on the at least one geometrical parameter of the corresponding carrying element. Thus, the calibration routine may be performed independent of a manufacturing process and the application unit and the corresponding carrying element may be used in a future manufacturing process. Hence, the apparatus for additively manufacturing of three-dimensional objects may be set in advance to the manufacturing process, as the calibration routine may be performed before the manufacturing process is started, in particular before the build material is inserted into the process chamber (e.g. with a dose module).

Of course, the control unit may also be adapted to assign a calibrated carrying element to a manufacturing process the corresponding application unit is used in, wherein the adjustment of the carrying element has been performed dependent on the at least one determined geometrical parameter of the corresponding application unit.

Preferably, the calibration device may be adapted to, in particular automatically, adjust the application element and/or the carrying element with the application element arranged inside the apparatus and/or the carrying element inside the powder module and/or the calibration device may be adapted to determine the at least one geometrical parameter of the carrying element with the carrying element arranged inside the apparatus and/or the at least one geometrical parameter of the application unit with the application unit arranged inside the apparatus.

As described before, the calibration routine may be performed with the carrying element and/or the application unit in place, i.e. arranged inside the process chamber of the apparatus. Therefore, the process conditions inside the process chamber do not have to be affected by opening the process chamber, as the carrying element and/or the application unit may be measured and adjusted accordingly without the need to bring the carrying element and/or the application unit outside the process chamber or to interfere with the inside of the process chamber from outside the apparatus.

According to another embodiment of the apparatus, the calibration device may be adapted to set a defined offset value to the determined geometrical parameter. The offset value may take apparatus specific parameters into calculation that influence the relative position of the carrying element and the application unit, in particular the application element (the edge of the application element). For example, the offset value may consider an initial position of the carrying element. Preferably, the offset value or the offset values the calibration device may set are predefined by the manufacturer and cannot be changed by the user of the apparatus.

Further, a display unit may be assigned to the determination unit, in particular to the optical sensor, wherein the display unit, preferably a monitor, is adapted to display the data captured by the optical sensor that is assigned to the determination unit. For example, the display unit may be used to display the data captured by the optical sensor to a user in real-time. Thus, the image of the edge of the application element recorded via the optical sensor may be display to a user in real-time. Additionally, a user input interface may be provided that is adapted to receive an input of a user, wherein the user input interface is adapted to transmit the user input to the control unit. Thus, the application element may be adjusted dependent on the user input. The user may therefore, view the captured data that are displayed via the display unit and adjust the application element via the user input accordingly.

Thus, according to the determined geometrical parameter of the carrying element, the distance of the application element can be adjusted by the user. The user may position the determination unit in a defined position relative to the edge of the application element, e.g. to a section near the lower left corner of the application element. The determination unit, in particular an optical sensor, allows for measuring the distance in the corresponding position, which can be display to the user via the display unit.

The position of the edge relative to the determined geometrical parameter of the carrying element, e.g. the height of the carrying element, is then displayed to the user, wherein the user may manually adjust positioning means and lock nuts according to the displayed position of the edge. The same procedure may be repeated for at least one other part of the edge, e.g. near the lower right corner of the application element. After the positioning of the application element, in particular the edge, is finished, the user may verify the adjustment of the edge via the determination unit. Of course, the user may also adjust the carrying element dependent on at least one geometrical parameter of the application element accordingly.

Besides, the invention relates to a method for operating at least one calibration device for an apparatus for additively manufacturing of three-dimensional objects, in particular an inventive calibration device, wherein at least one geometrical parameter of a carrying element of a powder module is determined and an application unit of the apparatus is, in particular automatically, adjusted dependent on the at least one determined geometrical parameter of the carrying element and/or at least one geometrical parameter of an application unit of the apparatus is determined and a carrying element of a powder module is, in particular automatically, adjusted dependent on the at least one determined geometrical parameter of the application unit.

All details, features and advantages described with respect to the inventive calibration device are fully transferable to the inventive apparatus and the inventive method. Of course, all details, features and advantages described with respect to the inventive apparatus are fully transferable to the inventive calibration device and the inventive method, as well.

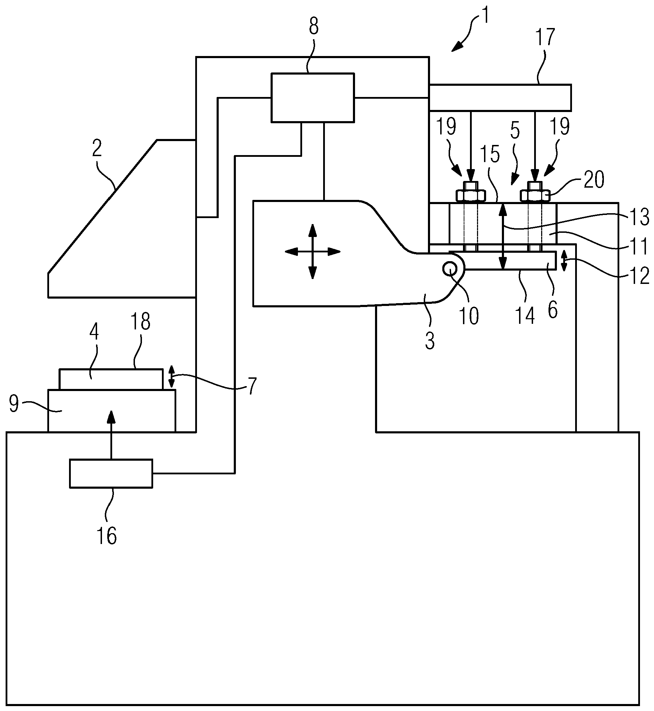

Exemplary embodiments of the invention are described with reference to the Fig. The sole Fig. is a schematic diagram and shows an inventive determination device.

The sole figure shows a calibration device 1 for an apparatus for additively manufacturing of three-dimensional objects (not shown), which calibration device 1 comprises two determination units 2, 3, wherein the determination unit 2 is adapted to determine a geometrical parameter of a carrying element 4, in particular a build plate, and the determination unit 3 is adapted to determine a geometrical parameter of an application unit 5, in particular an application element 6, e.g. a coater blade.

The determination unit 2 comprises an optical sensor (not shown) adapted to determine a height of the carrying element 4 (depicted by an arrow 7). The determination unit 2 may transfer the determination results, in particular the height of the carrying element 4 to a control unit 8. The determination unit 2 may determine the height of the carrying element 4 in multiple positions of the carrying element 4. Thus, the determination unit 2 may determine whether the surface of the carrying element 4 comprises a slope or is inclined with respect to a holding structure 9.

The determination unit 3 also comprises an optical sensor 10, wherein the determination unit 3 is adapted to measure the height (depicted by an arrow 12) of the application element 6. The determination unit 3 is also adapted to measure an orientation of the application element 6 relative to an application element carrier 11 the application element 6 is connected with. In particular, the determination unit 3 may determine a distance 13 between an edge 14 of the application element 6 and a surface 15 of the application element carrier 11. Of course, another reference point or another reference plane than the surface 15 of the application element carrier 11 can also be used. The edge 14 of the application element 6 faces the carrying element 4 or the build plane, respectively, with the application element 6 in a coating condition in which build material is applied onto the build plane via the application element 6. The determination unit 3 may transfer the results of the determination of the geometrical parameter of the application element 6 to the control unit 8.

The calibration device 1 may comprise a drive means (not shown) adapted to drive the determination unit 3 in that the distance 13 can be measured in multiple positions along the application element 6. Further, the quality of the edge 14 of the application element may be determined along the length of the application element 6.

The calibration device 1 comprises two calibration units 16, 17 that are adapted to, in particular automatically, adjust the carrying element 4 or the application unit 5, respectively. The calibration unit 16 is assigned to, in particular automatically, adjusting carrying elements 4, wherein it is possible that dependent on the at least one geometrical parameter of the application element 6 determined via the determination unit 3 an automated adjustment of the carrying element 4 or the holding structure 9 holding the carrying element 4 is possible. The calibration unit 16 may therefore, interact with the carrying element 4 or the holding structure 9 in that an upper surface 18 of the carrying element 4 may be positioned relative to the holding structure 9.

Further, it is possible that dependent on the at least one geometrical parameter of the carrying element 4, in particular the height, an adjustment of the application unit 5 is performed. Thus, the calibration unit 17 may interact with positioning means 19 connecting the application element 6 to the application element carrier 11. Thus, the distance 13 may be changed by interacting with the positioning means 19. In particular, the application element 6 may be extended or retracted with respect to the application element carrier 11 by interacting with the positioning means 19.

Thus, the distance 13 of the edge 14 of the application element 6 from the surface 15 of the application element carrier 11 may be changed dependent on the at least one geometrical parameter of the carrying element 4, in particular the height of the carrying element 4 (depicted by the arrow 7). After the distance 13 has been set, the positioning means 19 can be locked via lock nuts 20.

As can further be derived from the Fig., the calibration device 1 forms a combined module, wherein the carrying element 4 can be measured and the application unit 5 can be adjusted and vice versa.

It is also possible to have the calibration device 1 only comprise one determination unit 2, 3 and one calibration unit 16, 17 or two determination units 2, 3 and only one calibration unit 16, 17. For example, the calibration device 1 may comprise a determination unit 2 adapted to determine the at least one geometrical parameter of the carrying element 4, in particular the height of the carrying element 4. Dependent on the determined geometrical parameter of the carrying element 4, the distance 13 of the application element 5 can be adjusted, that defines the distance 13 between the edge 14 of the application element 6 and a base surface 15 of the application element carrier 11 (and thereby defines the relative position in a coating state). The adjustment of the distance 13 could be based on a manufacturer specific standard distance. Additionally, the distance 13 can be determined via the determination unit 3.

Accordingly, it is also possible to have the calibration device 1 determine the distance 13 via the determination unit 3 and, in particular automatically, adjust the carrying element 4 via the calibration unit 16. Of course, the calibration can be verified via the determination unit 2.

Further, a display unit (not shown) may be assigned to the determination unit 3, in particular to the optical sensor 10, wherein the display unit, preferably a monitor, is adapted to display the data captured by the optical sensor 10. For example, the display unit may be used to display the data captured by the optical sensor 10 to a user in real-time. Thus, the image of the edge 14 of the application element 6 recorded via the optical sensor 10 may be display to a user in real-time. Additionally, a user input interface (not shown) may be provided that is adapted to receive an input of a user, wherein the user input interface is adapted to transmit the user input to the control unit 8. Thus, the application element 6 may be adjusted dependent on the user input. The user may therefore, view the captured data that are displayed via the display unit and adjust the application element 6 accordingly.

Thus, according to the determined geometrical parameter of the carrying element 4, the distance 13 of the application element 5 can be adjusted by the user. The user may position the determination unit 3 in a defined position relative to the edge 14 of the application element 6, e.g. to a section of the edge 14 near the lower left corner of the application element 6. The optical sensor 10 allows for measuring the distance 13 in the corresponding position, which can be display to the user via the display unit.

The position of the edge 14 relative to the determined geometrical parameter of the carrying element 4, e.g. the height of the carrying element 4, is then displayed to the user, wherein the user may manually adjust the positioning means 19 and the lock nuts 20 according to the displayed position of the edge 14. The same procedure may be repeated for at least one other part of the edge, e.g. near the lower right corner of the application element 6. After the positioning of the application element 6, in particular the edge 14 is finished, the user may verify the adjustment of the edge 14 via the determination unit 3.

The calibration device 1 may be arranged inside an apparatus for additively manufacturing three-dimensional objects, in particular inside a process chamber (not shown). This allows for performing the calibration routine inside the apparatus without the need of bringing the carrying element 4 or the application unit 5 out of the process atmosphere inside the process chamber.

Of course, the inventive method may be performed on the calibration device 1.

## Claims

1. Calibration device (1) for an apparatus for additively manufacturing of three-dimensional objects, which calibration device (1) comprises at least one determination unit (2, 3) and at least one calibration unit (16, 17), wherein the at least one determination unit (2) is adapted to determine at least one geometrical parameter of a carrying element (4) of a powder module and wherein the at least one calibration unit (17) is adapted to, in particular automatically, adjust an application unit (5) of the apparatus dependent on the at least one determined geometrical parameter of the carrying element (4) and/or wherein the at least one determination unit (3) is adapted to determine at least one geometrical parameter of an application unit (5) of the apparatus and wherein the at least one calibration unit (16) is adapted to, in particular automatically, adjust a carrying element (4) of a powder module dependent on the at least one determined geometrical parameter of the application unit (5).

2. Calibration device according to one of the preceding claims, **characterized in that** the at least one geometrical parameter is determined via
- an optical determination unit (2, 3) and/or
- a tactile determination unit (2, 3) and/or
- a supersonic determination unit (2, 3).

3. Calibration device according to one of the preceding claims, **characterized in that** the determination unit (3) is adapted to determine an orientation of an application element (6) of the application unit (5) relative to an application element carrier (11) or a distance (13) between the application element (6) and the application element carrier (11).

4. Calibration device according to one of the preceding claims, **characterized in that** the calibration unit (17) is adapted to adjust a distance (13) between the application element carrier (11) and an edge (14) of the application element (6) in at least one position along the application element (6).

5. Calibration device according to one of the preceding claims, **characterized in that** the calibration unit (17) is adapted to adjust at least two different distances (13) for at least two positions along the application element (6).

6. Calibration device according to one of the preceding claims, **characterized in that** the distance and/or the orientation are determined via
- an optical determination unit (2, 3) and/or
- a tactile determination unit (2, 3) and/or
- a supersonic determination unit (2, 3).

7. Calibration device according to one of the preceding claims, **characterized in that** the calibration unit (16, 17) and the determination unit (2, 3) form a combined module.

8. Calibration device according to one of the preceding claims, **characterized in that** the calibration device (1) is connected or connectable with the apparatus, in particular integrated in the apparatus.

9. Apparatus for additively manufacturing of three-dimensional objects by means of successive layerwise selective irradiation and consolidation of layers of a build material which can be consolidated by means of an energy source, **characterized by** a calibration device (1), in particular a calibration device (1) according to one of the preceding claims, which calibration device (1) comprises at least one determination unit (2, 3) and at least one calibration unit (16, 17), wherein the at least one determination unit (2) is adapted to determine at least one geometrical parameter of a carrying element (4) of a powder module and wherein the at least one calibration unit (17) is adapted to, in particular automatically, adjust an application unit (5) of the apparatus dependent on the at least one determined geometrical parameter of the carrying element (4) and/or wherein the at least one determination unit (3) is adapted to determine at least one geometrical parameter of an application unit (5) of the apparatus and wherein the at least one calibration unit (16) is adapted to, in particular automatically, adjust a carrying element (4) of a powder module dependent on the at least one determined geometrical parameter of the application unit (5).

10. Apparatus according to claim 9, **characterized in that** the calibration device (1) is arranged externally to the apparatus or the calibration device (1) is at least partially, in particular the calibrating unit, integrated in the apparatus.

11. Apparatus according to claim 9 or 10, **characterized by** a control unit (8) adapted to assign a calibrated application unit (5) to a manufacturing process the corresponding carrying element (4) is used in, wherein the adjustment of the application unit (5) has been performed dependent on the at least one geometrical parameter of the corresponding carrying element (4).

12. Apparatus according to one of the claims 9 to 11, **characterized by** a control unit (8) adapted to assign a calibrated carrying element (4) to a manufacturing process the corresponding application unit (5) is used in, wherein the adjustment of the carrying element (4) has been performed dependent on the at least one determined geometrical parameter of the corresponding application unit (5).

13. Apparatus according to one of the claims 9 to 12, **characterized in that** the calibration device (1) is adapted to, in particular automatically, adjust the application element (6) and/or the carrying element (4) with the application element (6) arranged inside the apparatus and/or the carrying element (4) inside the powder module and/or the calibration device (1) is adapted to determine the at least one geometrical parameter of the carrying element (4) with the carrying element (4) arranged inside the apparatus and/or the at least one geometrical parameter of the application unit (5) with the application unit (5) arranged inside the apparatus.

14. Apparatus according to one of the claims 9 to 13, **characterized in that** the calibration device (1) is adapted to set a defined offset value to the determined geometrical parameter.

15. Method for operating at least one calibration device (1) for an apparatus for additively manufacturing three-dimensional objects, in particular a calibration device (1) according to one of the claims 1 to 8, **characterized in that** at least one geometrical parameter of a carrying element (4) of a powder module is determined and an application unit (5) of the apparatus is, in particular automatically, adjusted dependent on the at least one determined geometrical parameter of the carrying element (4) and/or at least one geometrical parameter of an application unit (5) of the apparatus is determined and a carrying element (4) of a powder module is, in particular automatically, adjusted dependent on the at least one determined geometrical parameter of the application unit (5).
